(19) Europäisches Patentamt
European Patent Office
Office européen des brevets

(11) **EP 4 607 264 A1**

(12) **EUROPEAN PATENT APPLICATION**
published in accordance with Art. 153(4) EPC

(43) Date of publication:
**27.08.2025 Bulletin 2025/35**

(21) Application number: **23902575.2**

(22) Date of filing: **07.12.2023**

(51) International Patent Classification (IPC):
***G02B 27/01*** (2006.01)

(52) Cooperative Patent Classification (CPC):
**G02B 27/01**

(86) International application number:
**PCT/CN2023/137011**

(87) International publication number:
**WO 2024/125379 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 CN 202211606269**

(71) Applicant: **Huawei Technologies Co., Ltd.
Shenzhen, Guangdong 518129 (CN)**

(72) Inventors:
• **YUAN, Le
Shenzhen, Guangdong 518129 (CN)**
• **WANG, Peng
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **IMAGE PROCESSING METHOD, HEAD-MOUNTED DISPLAY DEVICE, AND MEDIUM**

(57)    An image processing method, a head-mounted display device, and a medium are disclosed, and relate to the field of image processing technologies. The head-mounted display device includes one or two zoomable cameras (120). A user can adjust a magnification, that is, a zoom ratio, based on a requirement. When the user cannot clearly see a distant object, the user adjusts the magnification via the zoomable camera (120), and then performs image processing, for example, super-resolution processing, image enhancement processing, or image stabilization processing on a magnified part, so that the user can see the distant object without an external device. In addition, the user does not need to hold the head-mounted display device with both hands. This can improve portability. In addition, an IMU (180) in the head-mounted display device is used to perform image stabilization processing when an image is magnified, and no additional component needs to be added.

| |
|---|
| Determine a region of interest in a target scene viewed by a user via a head-mounted display device — 401 |
| Capture at least one scene image for the target scene via at least one zoomable camera — 402 |
| Perform image processing on the at least one scene image to obtain a left-eye target image and a right-eye target image, where the image processing includes zoom-in processing performed on an image in the region of interest in the at least one scene image — 403 |
| Display the left-eye target image on a left-eye display unit of a display, and display the right-eye target image on a right-eye display unit of the display — 404 |

FIG. 4A

**Description**

CROSS-REFERENCE TO RELATED APPLICATIONS

This application claims priority to Chinese Patent Application No. 202211606269.5, filed with the China National Intellectual Property Administration on December 14, 2022, and entitled "IMAGE PROCESSING METHOD, HEAD-MOUNTED DISPLAY DEVICE, AND MEDIUM", which is incorporated herein by reference in its entirety.

TECHNICAL FIELD

This application relates to the field of image processing technologies, and in particular, to an image processing method, a head-mounted display device, and a medium.

BACKGROUND

A scale recognition capability of a human eye on an object in fine space is limited. For example, when the human eye needs to clearly see a distant object or landscape, a device like a telescope is usually required to magnify a presentation scale of the object of concern, so that the human eye can easily distinguish the object of concern. For another example, a person whose physiological function is degraded due to age growth, for example, a person with presbyopia, needs to use an optical instrument (a magnifier or presbyopic glasses) to magnify a subtle object, so that the human eye can recognize the subtle object.
The telescope or the like needs to be held with both hands, and a nearby object cannot be viewed due to a large magnification ratio. The magnifier and the presbyopic glasses have fixed magnifications, and cannot meet use requirements of a plurality of application environments.

SUMMARY

Embodiments of this application provide an image processing method, a head-mounted display device, and a medium, to meet use requirements of a plurality of application environments.
According to a first aspect, an embodiment of this application provides a head-mounted display device, including one or two zoomable cameras and a display.
In a possible design, the head-mounted display device includes two zoomable cameras: a first zoomable camera and a second zoomable camera. The first zoomable camera is configured to capture a first image viewed by a left eye of a user in a target scene. The second zoomable camera is configured to capture a second image viewed by a right eye of the user in the target scene. The display is configured to display a left-eye target image on a left-eye display unit of the display, and display a right-eye target image on a right-eye display unit of the display. The left-eye target image is obtained after zoom-in processing is performed on a region of interest (region of interest, ROI) of the user included in the first image, and the right-eye target image is obtained after zoom-in processing is performed on an ROI included in the second image. For example, the zoom-in processing may be super-resolution processing.
In another possible design, the head-mounted display device includes one zoomable camera. The zoomable camera is configured to capture an image viewed by a user in a target scene. The display is configured to display a left-eye target image on a left-eye display unit of the display, and display a right-eye target image on a right-eye display unit of the display. The left-eye target image and the right-eye target image are obtained by performing image processing on the image captured by the zoomable camera. The image processing includes performing binocular disparity adjustment on the image and performing zoom-in processing on a region of interest.
In this embodiment of this application, at least one zoomable camera is added to the head-mounted display device, and the user may adjust a magnification, namely, a zoom ratio, based on a requirement. When the user cannot clearly see a distant object, the user can adjust the magnification to see the distant object without an external device. In addition, the user does not need to hold the head-mounted display device with both hands. This can improve portability.
In some scenarios, the head-mounted display device may perform image processing on a scene image, so that an image obtained through image processing fits to a size of the display, a resolution is high, and the image can be clearly displayed. In addition, when a zoom ratio of the optical zoomable camera is limited, a magnification ratio may be increased through image processing, so that the head-mounted display device reaches a magnification required by the user.
In a possible design, a zoom ratio used by the first zoomable camera to capture the first image is the same as or different from a zoom ratio used by the second zoomable camera to capture the second image. The zoom ratio used by the first zoomable camera and the zoom ratio used by the second zoomable camera are separately controlled. In the foregoing design, the user may independently adjust magnification of the image viewed by the left eye or the right eye.
In a possible design, the head-mounted display device further includes a processor. The processor is configured to separately perform image processing on the first image and the second image to obtain the left-eye target image and the right-eye target image. The image processing includes zoom-in processing performed on the region of interest in the first image and the region of interest in the second image.

In a possible design, the processor is further configured to: obtain the zoom ratio used by the first zoomable camera and the zoom ratio used by the second zoomable camera, and determine the regions of interest.

In a possible design, for example, the zoom ratio of the first zoomable camera and the zoom ratio of the second zoomable camera are the same. The processor is specifically configured to determine, based on the zoom ratios, central picture regions/a central picture region corresponding to the zoom ratios/zoom ratio from shooting ranges/a shooting range of the first zoomable camera and/or the second zoomable camera. The central picture regions/central picture region are/is used as the regions/region of interest.

In a possible design, for example, the zoom ratio of the first zoomable camera and the zoom ratio of the second zoomable camera are different. The processor is specifically configured to: determine, from a shooting range of the first zoomable camera, a first central picture region corresponding to the zoom ratio of the first zoomable camera; determine, from a shooting range of the second zoomable camera, a second central picture region corresponding to the zoom ratio of the second zoomable camera; and determine the ROIs based on the first central picture region and the second central picture region.

In a possible design, the processor is specifically configured to determine, according to an eye tracking algorithm, the ROIs/ROI from the shooting ranges/shooting range of the first zoomable camera and/or the second zoomable camera.

In a possible design, the processor is specifically configured to: separately perform, based on a distance between a left-eye pupil and a right-eye pupil of the user and positions of the first zoomable camera and the second zoomable camera on the head-mounted display device, binocular disparity adjustment on the first image and the second image, to obtain a left-eye display view and a right-eye display view; perform zoom-in processing on the ROI in the left-eye display view to obtain the left-eye target image; and perform zoom-in processing on the ROI in the right-eye display view to obtain the right-eye target image.

In a possible design, the head-mounted display device includes one zoomable camera. The processor is specifically configured to: perform, based on a distance between a left-eye pupil and a right-eye pupil of the user and a position of the zoomable camera on the head-mounted display device, binocular disparity adjustment on the image captured by the zoomable camera, to obtain a left-eye display view and a right-eye display view; perform zoom-in processing on an image in the region of interest in the left-eye display view to obtain the left-eye target image; and perform zoom-in processing on an image in the region of interest in the right-eye display view to obtain the right-eye target image.

In a possible design, the image processing further includes image enhancement processing for the left-eye display view and image enhancement processing for the right-eye display view.

The image enhancement processing includes at least one of the following:

image sharpening, image dehazing, image deraining, image deblurring, image demosaicing, image contrast enhancement, image color enhancement, image detail enhancement, or image brightness enhancement.

In a possible design, the head-mounted display device further includes an inertial measurement unit IMU.

The inertial measurement unit IMU is configured to output IMU measurement data.

The processor is further configured to: when a head of the user is deflected, separately perform image stabilization processing on the left-eye display view and the right-eye display view based on the IMU measurement data.

In a possible design, the processor is further configured to: before the zoom ratio is obtained, determine that a visual assistance function is in an enabled state.

In a possible design, the head-mounted display device is a mixed reality MR helmet.

According to a second aspect, an embodiment of this application provides an image processing method, applied to a head-mounted display device. The head-mounted display device includes a display and two zoomable cameras or one zoomable camera. Two zoomable cameras: a first zoomable camera and a second zoomable camera are used as an example. The method includes: obtaining zoom ratios; determining regions of interest ROIs in a target scene; capturing, via the first zoomable camera, a first image viewed by a left eye of a user in the target scene; capturing, via the second zoomable camera, a second image viewed by a right eye of the user in the target scene; separately performing image processing on the first image and the second image to obtain a left-eye target image and a right-eye target image, where the image processing includes zoom-in processing performed on the ROIs in the first image and the second image; and displaying the left-eye target image on a left-eye display unit of the display, and displaying the right-eye target image on a right-eye display unit of the display.

In some possible embodiments, image processing includes binocular disparity adjustment. In some possible embodiments, the image processing includes zoom-in processing, for example, super-resolution processing, performed on images in the regions of interest in the first image and the second image.

In this embodiment of this application, at least one zoomable camera is added to the head-mounted display device, and the user may adjust a magnification, namely, a zoom ratio, based on a requirement. When the user cannot clearly see a distant object, the user can adjust the magnification to see the distant object without an external device. In addition, the user does not need to hold the head-mounted display device with both hands. This can improve portability.

In some scenarios, the head-mounted display device may perform image processing on a scene image, so that an image obtained through image processing fits to a size of the display, a resolution is high, and the image can be clearly displayed. In addition, when a zoom ratio of the optical zoomable camera is limited, a magnification ratio may be increased through image processing, so that the head-mounted display device reaches a magnification required by the user.

In a possible design, the determining regions of interest in a target scene includes: obtaining the zoom ratios, and determining central picture regions/a central picture region corresponding to the zoom ratios/zoom ratio from shooting ranges/a shooting range of the first zoomable camera and/or the second zoomable camera, where the central picture regions/central picture region are/is used as the regions/region of interest.

For example, an association relationship between the zoom ratio and the central picture region in the shooting range may be preset. Therefore, when a zoom ratio is determined, a region boundary of the central picture region in the shooting range may be determined based on the association relationship.

In a possible design, the determining regions of interest in a target scene includes:
determining, according to an eye tracking algorithm, the regions/region of interest in the target scene viewed by the user from the shooting ranges/shooting range of the first zoomable camera and/or the second zoomable camera.

For example, within a field of view of the user, a region on which the user focuses is determined according to the eye tracking algorithm, and the region is the region of interest of the user. In response to a zoom-in operation of the user, the scene image is captured via the zoomable camera, and then the zoom-in operation is performed on the region of interest of the user.

In a possible design, the separately performing image processing on the first image and the second image to obtain a left-eye target image and a right-eye target image includes:

separately performing binocular disparity adjustment on the first image and the second image based on a distance between a left-eye pupil and a right-eye pupil of a user and positions of the first zoomable camera and the second zoomable camera on the head-mounted display device, to obtain a left-eye display view and a right-eye display view; and

performing zoom-in processing on an image in the region of interest in the left-eye display view to obtain the left-eye target image, and performing zoom-in processing on an image in the region of interest in the right-eye display view to obtain the right-eye target image.

In the foregoing design, the head-mounted display device includes a binocular zoomable camera, and binocular disparity adjustment is performed on a scene image captured by the binocular zoomable camera. In this way, a stereoscopic sense of an object in an image viewed by the user on the display is enhanced, the object is more real, and user experience is improved.

In a possible design, the head-mounted display device includes one zoomable camera. The performing image processing on an image captured by the zoomable camera to obtain a left-eye target image and a right-eye target image includes: performing, based on a distance between a left-eye pupil and a right-eye pupil of the user and a position of the zoomable camera on the head-mounted display device, binocular disparity adjustment on the image captured by the zoomable camera, to obtain a left-eye display view and a right-eye display view; performing zoom-in processing on an image in the region of interest in the left-eye display view to obtain the left-eye target image; and performing zoom-in processing on an image in the region of interest in the right-eye display view to obtain the right-eye target image.

In the foregoing design, the head-mounted display device includes a monocular zoomable camera. The head-mounted display device in this application has a function of performing binocular disparity adjustment on a scene image captured by the binocular zoomable camera. In this way, a stereoscopic sense of an object in an image viewed by the user on the display is enhanced, the object is more real, and user experience is improved.

In a possible design, the image processing further includes image enhancement processing for the left-eye display view and image enhancement processing for the right-eye display view. The image enhancement processing includes at least one of the following:
image sharpening, image dehazing, image deraining, image deblurring, image demosaicing, image contrast enhancement, image color enhancement, image detail enhancement, or image brightness enhancement.

In this embodiment of this application, image enhancement processing is additionally performed on an image that needs to be magnified, so that when the user views a distant object, a problem like image blur caused by air scattering can be reduced, and image definition can be improved. Deraining processing and dehazing processing are performed on a scene image captured in bad weather such as rain and haze, so that definition of a displayed image can be improved, and viewing experience of the user can be improved.

In a possible design, the head-mounted display device further includes an inertial measurement unit IMU. IMU measurement data output by the inertial measurement unit IMU is obtained. When a head of the user is deflected, image stabilization processing is separately performed on the left-eye display view and the right-eye display view based on the IMU measurement data.

In the foregoing design, the IMU in the head-mounted display device is used. When jitter occurs during image magnification, image stabilization processing may be implemented based on the IMU measurement data, to further improve imaging quality of a displayed image viewed by the user.

In a possible design, before the zoom ratio is obtained, the method further includes: determining that a visual assistance function is in an enabled state.

In some embodiments, the visual assistance function may be in a standby state with low power consumption. The visual assistance function may be woken up in response to a wake-up instruction of the user. For example, the visual assistance function is woken up by a voice command or a button or a knob set by the head-mounted display device.

In a possible design, the head-mounted display device is a mixed reality MR helmet.

Currently, the MR helmet does not have an image magnification function. In this embodiment of this application, a zoomable camera is added to the MR helmet, to implement a mixed reality function, so that a user with presbyopia or needs to implement a telescopic function can clearly view a desired distant scene without wearing presbyopic glasses or using a telescope.

According to a third aspect, an embodiment of this application provides an image processing apparatus, included in a head-mounted display device. The head-mounted display device further includes a first zoomable camera, a second zoomable camera, and a display.

A processing module is configured to: determine regions of interest ROIs in a target scene; capture, via the first zoomable camera, a first image viewed by a left eye of a user in the target scene; capture, via the second zoomable camera, a second image viewed by a right eye of the user in the target scene; and separately perform image processing on the first image and the second image to obtain a left-eye target image and a right-eye target image. The image processing includes zoom-in processing performed on the ROIs in the first image and the second image.

A display module is configured to: display the left-eye target image on a left-eye display unit of the display, and display the right-eye target image on a right-eye display unit of the display.

In a possible design, the apparatus further includes an obtaining module, configured to obtain zoom ratios. The processing module is specifically configured to determine, from shooting ranges/a shooting range of the first zoomable camera and/or the second zoomable camera, central picture regions/a central picture region corresponding to the zoom ratios/zoom ratio, where the central picture regions/central picture region are/is used as the ROIs/ROI.

In a possible design, the processing module is specifically configured to determine, according to an eye tracking algorithm, the regions/region of interest from the shooting ranges/shooting range of the first zoomable camera and/or the second zoomable camera.

In a possible design, the processing module is specifically configured to:

separately perform binocular disparity adjustment on the first image and the second image based on a distance between a left-eye pupil and a right-eye pupil of the user and positions of the first zoomable camera and the second zoomable camera on the head-mounted display device, to obtain a left-eye display view and a right-eye display view; and

perform zoom-in processing on an image in a region of interest in the left-eye display view to obtain the left-eye target image, and perform zoom-in processing on an image in a region of interest in the right-eye display view to obtain the right-eye target image.

In a possible design, the image processing further includes image enhancement processing for the left-eye display view and image enhancement processing for the right-eye display view.

The image enhancement processing includes at least one of the following:
image sharpening, image dehazing, image deraining, image deblurring, image demosaicing, image contrast enhancement, image color enhancement, image detail enhancement, or image brightness enhancement.

In a possible design, the head-mounted display device further includes an inertial measurement unit IMU. The processing module is further configured to:

obtain IMU measurement data output by the inertial measurement unit IMU; and
when a head of the user is deflected, separately perform image stabilization processing on the left-eye display view and the right-eye display view based on the IMU measurement data.

In a possible design, the processing module is further configured to: before the zoom ratio is obtained, determine that a visual assistance function is in an enabled state.

In a possible design, the head-mounted display device is a mixed reality MR helmet.

According to a fourth aspect, an embodiment of this application provides a computer-readable storage medium.

The computer-readable storage medium stores a computer program or instructions. When the computer program or the instructions are executed by a head-mounted display device, the head-mounted display device is enabled to perform the method according to the first aspect or any design of the first aspect.

According to a fifth aspect, an embodiment of this application provides a computer program product. The computer program product includes a computer program or instructions. When the computer program or the instructions are executed by a head-mounted display device, the method according to the first aspect or any design of the first aspect is implemented.

In this application, based on the implementations provided in the foregoing aspects, the implementations may be further combined to provide more implementations.

BRIEF DESCRIPTION OF DRAWINGS

FIG. 1A is a diagram of a structure of a head-mounted display device according to an embodiment of this application;
FIG. 1B is a diagram of a structure of another head-mounted display device according to an embodiment of this application;
FIG. 1C is a diagram of configuration positions of zoomable cameras of a head-mounted display device according to an embodiment of this application;
FIG. 2 is a diagram of a structure of still another head-mounted display device according to an embodiment of this application;
FIG. 3 is a diagram of a structure of yet another head-mounted display device according to an embodiment of this application;
FIG. 4A is a schematic flowchart of an image processing method according to an embodiment of this application;
FIG. 4B is a schematic flowchart of another image processing method according to an embodiment of this application;
FIG. 5 is a diagram of possible binocular disparity adjustment according to an embodiment of this application;
FIG. 6 is a diagram of a relationship between a left-eye image projection and a right-eye image projection according to an embodiment of this application;
FIG. 7 is a diagram of view point transformation of a left-eye image according to an embodiment of this application;
FIG. 8 is a diagram of image processing in a scene according to an embodiment of this application; and
FIG. 9 is a diagram of a structure of an image processing apparatus according to an embodiment of this application.

DESCRIPTION OF EMBODIMENTS

The following describes in detail embodiments of this application with reference to accompanying drawings. Terms used in embodiments of this application are only used to explain specific embodiments of this application, but are not intended to limit this application. It is clear that the described embodiments are merely some rather than all of embodiments of this application. All other embodiments obtained by a person of ordinary skill in the art based on embodiments of this application without creative efforts shall fall within the protection scope of this application.

In the descriptions of this application, unless otherwise specified, "a plurality of" means two or more. In addition, "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in embodiments of this application, terms such as "first" and "second" are used to distinguish between same objects or similar objects whose functions and purposes are basically the same, to clearly describe technical solutions in embodiments of this application. A person skilled in the art may understand that the terms such as "first" and "second" do not limit a quantity or an execution sequence, and the terms such as "first" and "second" do not indicate a definite difference. It should be further noted that, unless otherwise specified, specific descriptions of some technical features in one embodiment may also be applied to explain corresponding technical features mentioned in another embodiment.

Embodiments of this application are applied to a mixed reality (mixed reality, MR) scenario or a virtual reality (virtual reality, VR) scenario. In the field of mixed reality, a mixed reality technology is to present virtual scene information in a real scene, and establish an information loop of interactive feedback between a real world, a virtual world, and a user, to enhance a sense of reality of user experience. A head-mounted display device in embodiments of this application may be MR glasses, an MR helmet, or the like. The head-mounted display device in embodiments of this application has functions of zooming in, telescoping, image processing, and displaying.

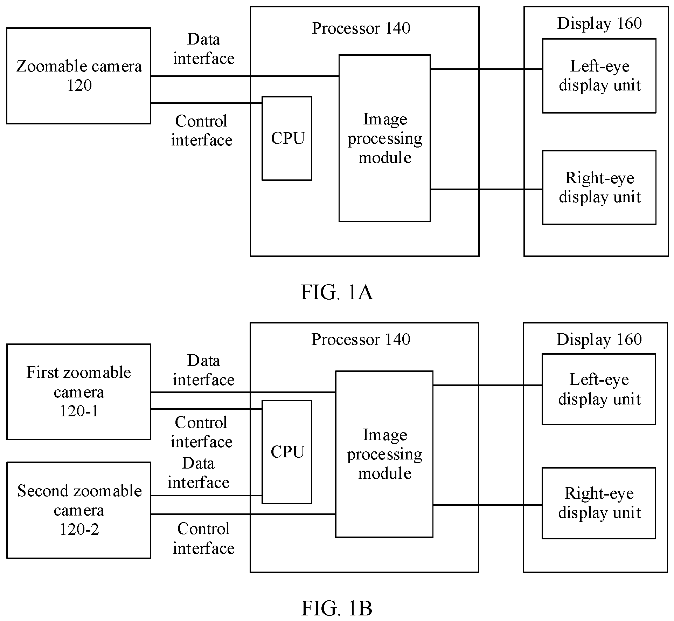

FIG. 1A and FIG. 1B each are a diagram of a system architecture of a head-mounted display device according to an embodiment of this application. The head-mounted display device includes at least one zoomable camera 120, a processor 140, and a display 160.

It may be understood that the structures shown in embodiments of this application do not constitute a specific limitation on the head-mounted display device. In some other embodiments of this application, the head-mounted display device may include more or fewer components than those shown in FIG. 1A and FIG. 1B, or some components may be combined, or some components may be split, or different component arrangements may be used. The components shown in FIG. 1A and FIG. 1B may be implemented by hardware, software, or a combination of software and hardware.

The processor 140 may include one or more processing units. For example, the processor 140 may include a central processing unit (central processing unit, CPU), an application processor (application processor, AP), a modem processor, a graphics processing unit (graphics processing unit, GPU), an image signal processor (image signal processor, ISP), a controller, a video codec, a digital signal processor (digital signal processor, DSP), and/or a neural network processing unit (neural network processing unit, NPU), and the like. Different processing units may be independent components, or may be integrated into one or more processors.

In an example, the processor 140 includes the CPU and an image processing module. For example, the image processing module may include one or more of an ISP, an NPU, a DSP, a GPU, and the like.

A memory may be further disposed in the processor 140, and is configured to store instructions and data. In some embodiments, the memory in the processor 140 is a cache. The memory may store instructions or data just used or cyclically used by the processor 140. If the processor 140 needs to use the instructions or the data again, the processor 140 may directly invoke the instructions or the data from the memory. This avoids repeated access, reduces waiting time of the processor 140, and improves system efficiency.

In FIG. 1A, an example in which the head-mounted display device includes one zoomable camera 120 is used. In FIG. 1B, an example in which the head-mounted display device includes two zoomable cameras 120 (which may also be referred to as a binocular zoomable camera), namely, a first zoomable camera 120-1 and a second zoomable camera 120-2 is used. The zoomable camera 120 (or the first zoomable camera 120-1 and the second zoomable camera 120-2) is connected to the processor 140 through a data interface and a control interface. The data interface is used by the zoomable camera 120 to transmit image data to the processor 140. The control interface is used by the processor 140 to send a control signal, for example, a zoom control signal, to the zoomable camera. For example, the data interface may be a mobile industry processor interface (Mobile Industry Processor Interface, MIPI), or another interface that may be used to transmit image data. For example, the control interface may be a serial peripheral interface (Serial Peripheral Interface, SPI), an inter-integrated circuit (Inter-Integrated Circuit, I2C) interface, or another interface that may be used to transmit the control signal.

In some scenarios, the head-mounted display device may include a plurality of zoomable cameras, and different cameras have different zoom ranges. For example, a zoom ratio of a long-focus camera is greater than 5, for example, the zoom ratio is 10X. A zoom ratio of a medium- and long-focus camera is less than the zoom ratio of the long-focus camera and greater than 1X, for example, 2X or 3X.

In some other scenarios, the head-mounted display device may include a plurality of pairs of zoomable cameras. Each pair of zoomable cameras has a same zoom range, for example, a pair of long-focus cameras and a pair of medium- and long-focus cameras. The long-focus camera may implement a telephoto function. The medium- and long-focus camera may be applied to a presbyopia scenario.

The I2C interface is a two-way synchronization serial bus, and includes one serial data line (serial data line, SDA) and one serial clock line (serial clock line, SCL). In some embodiments, the processor 140 may include a plurality of groups of I2C buses. The processor 140 may be separately coupled to different zoomable cameras through different I2C bus interfaces.

The MIPI interface includes a camera serial interface (camera serial interface, CSI), a display serial interface (display serial interface, DSI), and the like. In some embodiments, the processor 140 communicates with the zoomable camera 120 through the CSI interface, to implement a capture function of the head-mounted display device. The processor 140 and the display 160 may communicate with each other through the DSI interface, to implement a display function of the head-mounted display device.

In some embodiments, when the first zoomable camera 120-1 and the second zoomable camera 120-2 are used to capture images, the processor 140 may send control signals to the first zoomable camera 120-1 and the second zoomable camera 120-2. In this way, the first zoomable camera 120-1 and the second zoomable camera 120-2 maintain synchronous adjustment of focal lengths. In some embodiments, focusing and exposure control of the binocular zoomable camera may also be consistent. In some other embodiments, a zoom ratio of the first zoomable camera 120-1 and a zoom ratio of the second zoomable camera 120-2 may be separately controlled. For example, only the zoom ratio of the first zoomable camera 120-1 is adjusted. For another example, only the zoom ratio of the second zoomable camera 120-2 is adjusted. For still another example, the zoom ratio of the first zoomable camera 120-1 may be different from the zoom ratio of the second zoomable camera 120-2.

The display 160 is configured to display an image, a video, and the like. The display 160 may include a left-eye display unit and a right-eye display image. The left-eye display unit is configured to display an image, a video, and the like viewed by a left eye. The right-eye display unit is configured to display an image, a video, and the like viewed by a right eye. The display 160 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

The head-mounted display device may implement image shooting and video shooting functions via the ISP, the at least one zoomable camera 120, the GPU, the display 160, the application processor, and the like.

The ISP is configured to process data fed back by the zoomable camera 120. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the zoomable camera 120.

The zoomable camera 120 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP converts the digital image signal into a standard image signal in a format like RGB or YUV, and outputs the image signal to the image processing module. In some embodiments, the processor 140 may trigger, based on the program or the instructions in the memory, to start the zoomable camera 120, so that the zoomable camera 120 captures at least one image, and performs corresponding processing on the at least one image based on the program or the instructions, for example, digital magnification, binocular disparity adjustment, image sharpening, image dehazing, image deraining, image deblurring, image demosaicing, image contrast enhancement, image color enhancement, image detail enhancement, or image brightness enhancement.

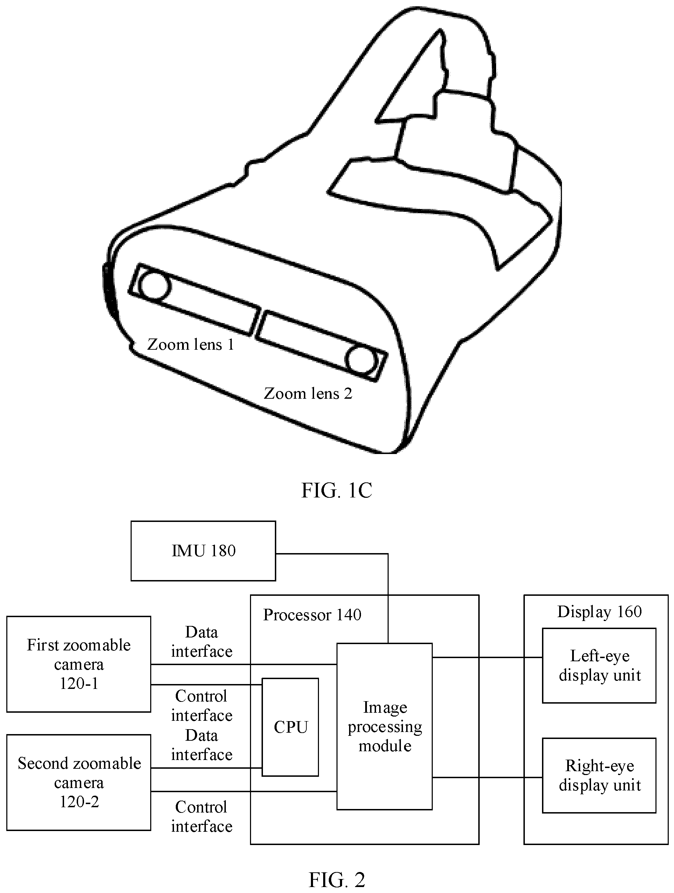

In some possible embodiments, the at least one zoomable camera 120 may be deployed on an external panel of the head-mounted display device, and faces a direction of an angle of view, as shown in FIG. 1C. To reduce a volume of the head-mounted display device, the at least one zoomable camera 120 may be deployed on the head-mounted display device in a manner of folding an optical path. A deployment manner of the at least one zoomable camera 120 is not specifically limited in this application. It should be understood that, when the head-mounted display device includes the binocular zoomable camera, a position of one of the zoomable cameras in the head-mounted display device is close to the left eye, and a position of the other zoomable camera in the head-mounted display device is close to the right eye.

In some embodiments, the head-mounted display device may further include an inertial measurement unit (inertial measurement unit, IMU) 180, as shown in FIG. 2. The IMU 180 is configured to output IMU measurement data. The IMU measurement data may include a three-axis attitude angle (or angular rate) and acceleration of an object. The IMU 180 in the head-mounted display device may be configured to perform pose positioning on the head-mounted display device. In this embodiment of this application, in a magnification or telescopic scenario, the IMU measurement data may be used for image stabilization processing.

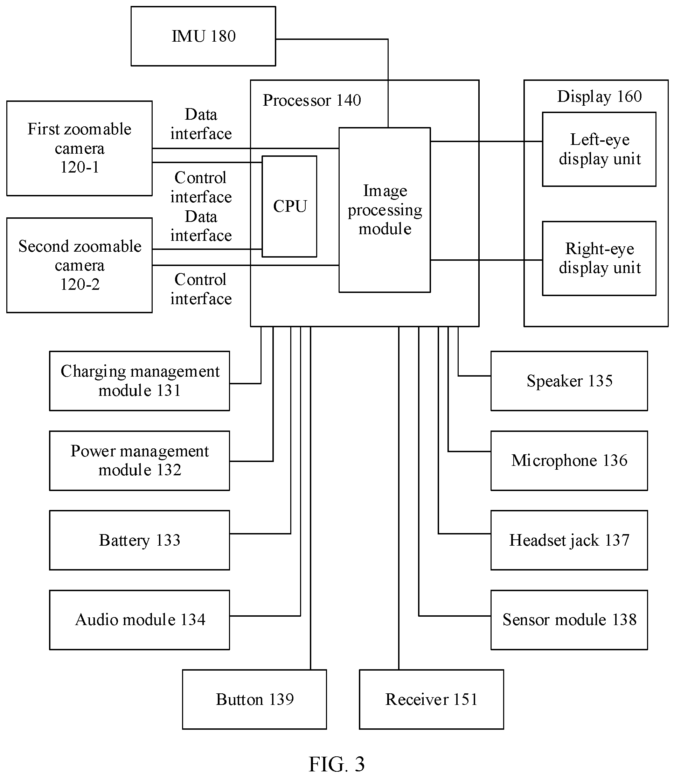

In some possible embodiments, as shown in FIG. 3, the head-mounted display device may further include a charging management module 131, a power management module 132, a battery 133, an audio module 134, a speaker 135, a microphone 136, a headset jack 137, a sensor module 138, a button 139, a receiver 151, and the like. The sensor module 138 may include a pressure sensor, a gyroscope sensor, a barometric pressure sensor, a magnetic sensor, an acceleration sensor, a temperature sensor, and the like.

The charging management module 131 is configured to receive charging input from a charger. The charger may be a wireless charger or a wired charger. In some embodiments of wired charging, the charging management module 131 may receive charging input from the wired charger through a USB interface. In some embodiments of wireless charging, the charging management module 131 may receive wireless charging input through a wireless charging coil of the head-mounted display device. The charging management module 131 supplies power to the head-mounted display device via the power management module 132 while charging the battery 133.

The power management module 132 is configured to connect to the battery 133, the charging management module 131, and the processor 140. The power management module 132 receives input of the battery 133 and/or the charging management module 131, and supplies power to the processor 140, the memory, the display 160, the zoomable camera 120, and the like. The power management module 132 may be further configured to monitor parameters such as a battery capacity, a quantity of battery cycles, and a battery health status (electric leakage or impedance). In some other embodiments, the power management module 132 may alternatively be disposed in the processor 140. In some other embodiments, the power management module 132 and the charging management module 131 may alternatively be disposed in a same component.

The audio module 134 is configured to convert digital audio information into an analog audio signal for output, and is also configured to convert analog audio input into a digital audio signal. The audio module 134 may be further configured to encode and decode an audio signal. In some embodiments, the audio module 134 may be disposed in the processor 140, or some functional modules in the audio module 134 are disposed in the processor 140.

The speaker 135, also referred to as a "loudspeaker", is configured to convert an audio electrical signal into a sound signal. The head-mounted display device may be used to listen to music or answer a hands-free call via the speaker 135.

The receiver 151, also referred to as an "earpiece", is configured to convert an audio electrical signal into a sound signal. When the head-mounted display device answers a call or receives a voice message, the receiver 151 may be placed near a human ear to receive voice.

The microphone 136, also referred to as a "mike" or a "mic", is configured to convert a sound signal into an electrical signal. When making a call or sending a voice message, a user may make a sound near the microphone 136 through the mouth of the user, to input a sound signal to the microphone 136. At least one microphone 136 may be disposed in the head-mounted display device. In some other embodiments, two microphones 136 may be disposed in the head-mounted display device, to implement a noise reduction function in addition to capturing a sound signal.

The headset jack 137 is configured to connect to a wired headset. The headset jack 137 may be a USB interface, or may be a 3.5 mm open mobile terminal platform (open mobile terminal platform, OMTP) standard interface or a cellular telecommunications industry association of the USA (cellular telecommunications industry association of the USA, CTIA) standard interface.

The USB interface is an interface that conforms to a USB standard specification, and may be specifically a mini USB interface, a micro USB interface, a USB type-C interface, or the like. The head-mounted display device may further include one or more USB interfaces. The USB interface may be configured to connect to a charger to charge the head-mounted display device, or may be configured to transmit data between the head-mounted display device and a peripheral device, or may be configured to connect to a headset for playing audio through the headset. The interface may be further configured to connect to another electronic device like a terminal device.

It may be understood that an interface connection relationship between the modules shown in embodiments of this application is merely an example for description, and does not constitute a limitation on a structure of the head-mounted display device. In some other embodiments of this application, the head-mounted display device may use interface connection manners different from those in the foregoing embodiment, or use a combination of a plurality of interface connection manners.

In a current related technology, to implement a telescopic function, an optical lens device with a fixed focal length is mounted outside an AR device, to cooperate with a photosensitive device to complete image capture. However, in this manner, only a telescopic magnification function at a fixed ration can be implemented. In another manner, a telescope is reconstructed, and an electronic capture channel is added in addition to an optical capture channel of the original telescope. The two paths are separately imaged, and are superimposed at a position of an ocular lens. In this manner, only the telescope is reconstructed, only a function of the telescope can be implemented, and portability is poor.

In this embodiment of this application, the head-mounted display device includes at least one zoomable camera and a display, and a focal length of the at least one zoomable camera may be adjusted based on a user requirement, to implement digital magnification of a region of interest of the user.

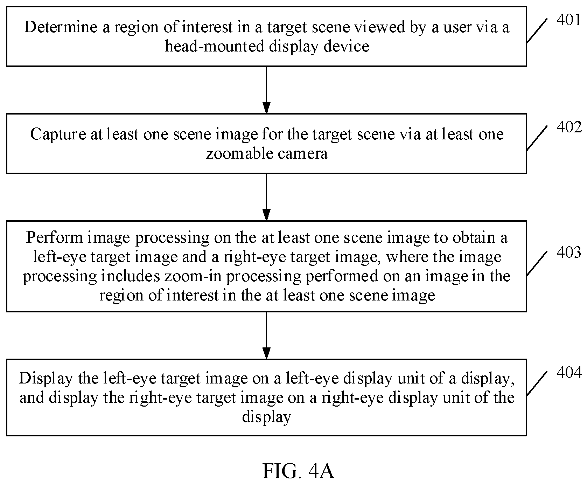

FIG. 4A is a schematic flowchart of a possible image processing method according to an embodiment of this application. The image processing method may be applied to the head-mounted display device shown in FIG. 1A to FIG. 3. The head-mounted display device includes at least one zoomable camera and a display. Steps in the method in FIG. 4A may be performed by the head-mounted display device, for example, may be performed by a processor or a processing module in the head-mounted display device.

401: Determine a region of interest (Region of Interest, ROI) in a target scene viewed by a user via the head-mounted display device.

402: Capture at least one scene image for the target scene via the at least one zoomable camera.

For example, the at least one scene image is captured for the target scene within a shooting range via the at least one zoomable camera.

For example, the head-mounted display device includes one zoomable camera. The at least one scene image may be captured via the zoomable camera in one time of shooting, that is, obtained in one time of exposure. A plurality of scene images are captured for subsequent image processing, to improve processing effect.

For another example, if the head-mounted display device includes a pair of zoomable cameras, each of the pair of zoomable cameras may capture N scene images. N is a positive integer. The pair of zoomable cameras capture the scene images at a same zoom ratio. The pair of zoomable cameras may alternatively capture the scene images at different zoom ratios.

For another example, when the head-mounted display device includes a plurality of zoomable cameras or a plurality of pairs of zoomable cameras, different zoomable cameras (or different pairs of zoomable cameras) have different zoom ranges. Different zoomable cameras (or different pairs of zoomable cameras) may be started based on the zoom ratio.

In this case, which zoomable camera to be started may be determined based on a comparison result of an obtained zoom ratio and a ratio threshold. For example, if the obtained zoom ratio is less than or equal to a first ratio threshold, a medium- and long-focus camera may be started. If the zoom ratio is greater than the first ratio threshold, a long-focus camera may be started. A value range of the first ratio threshold may be [A1, A2). For example, the value range of the first ratio threshold may be [5, 10). For example, the first ratio threshold may be 5, 6, 7, or 8. A ratio of the long-focus camera is greater than or equal to the first ratio threshold. For example, the ratio of the long-focus camera is 10X. In a possible implementation, when the zoom ratio is greater than 9.9, the N scene images may be captured via the long-focus camera.

403: Perform image processing on the at least one scene image to obtain a left-eye target image and a right-eye target image, where the image processing includes zoom-in processing performed on an image in a region of interest in the at least one scene image.

In some possible embodiments, when the zoom-in processing is performed on the image in the region of interest in the at least one scene image, the image in the region of interest may be cropped from the at least one scene image. Then, zoom-in processing is performed on the part of the image obtained through cropping. For example, parts that are in the at least one scene image and that correspond to the regions of interest are magnified to sizes of a left-eye display unit and a right-eye display unit. In this embodiment of this application, the image in the region of interest of the user is magnified and displayed on the display, so that the user can have better visual experience via the wearable display device. For example, a wearer with presbyopia may perform, via the wearable device, zoom-in processing on a region that cannot be clearly seen.

404: Display the left-eye target image on the left-eye display unit of the display, and display the right-eye target image on the right-eye display unit of the display.

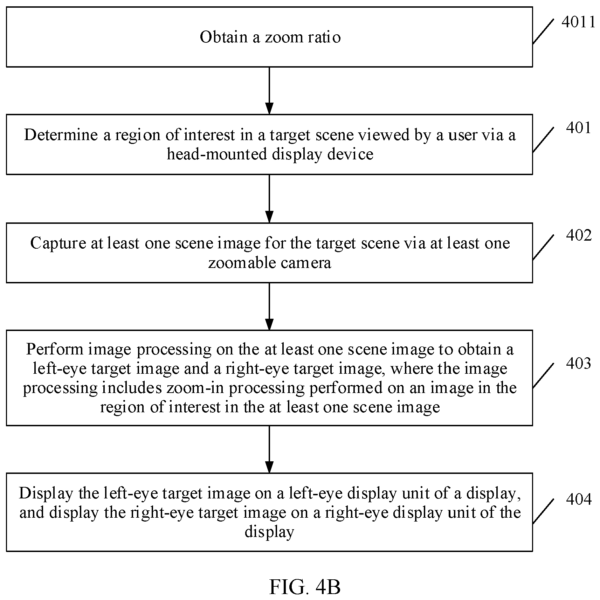

In a possible implementation, as shown in FIG. 4B, before step 401, step 4011 may be further performed to obtain a zoom ratio.

Alternatively, the zoom ratio may be a default zoom ratio of the wearable display device in a photographing mode, for example, a presbyopia mode or a telescope mode. The zoom ratio may alternatively be a zoom ratio selected by the user on the wearable display device.

In a possible example, a user interface is configured on the head-mounted display device, and is configured to obtain the zoom ratio input by the user. The zoom ratio may also be understood as a magnification. When a wearer of the head-mounted display device cannot clearly see an image of a region on the display due to vision, the wearer may input a magnification through the user interface. The user interface may be a button or a knob, or may include a voice recognition module. For example, the magnification may be determined through recognizing a voice instruction of the user. The user interface may alternatively be an interface configured to connect to an external control device like a handle. The user may operate the external control device to send a control signal to the head-mounted display device, to indicate the magnification. For example, the head-mounted display device may have a menu bar for the user to select the magnification.

The magnification may be an integer, for example, 1X, 2X, 3X, 10X, 50X, or greater, or may be a non-integer, for example, 1.5X. All these fall within the protection scope of this application.

A person skilled in the art should understand that the user interface may be implemented in any known common form. For example, the user interface is disposed in a controller that is connected to a product body in a wired or wireless manner, or is directly disposed in the product body. This is not specifically limited in this application.

In some possible scenarios, the user may set different zoom ratios for a first zoomable camera and a second zoomable camera.

In some possible implementations, determining the ROI in step 401 may be implemented in any one of the following possible manners. The following lists only three possible implementations. Other manners in which the ROI region can be determined are all applicable to this application.

In a first possible implementation:

A central picture region corresponding to the zoom ratio is determined, based on the zoom ratio, from the shooting range of the at least one zoomable camera, where the central picture region is used as the region of interest.

For example, an association relationship between the zoom ratio and the central picture region in the shooting range may be preset. Therefore, when a zoom ratio is determined, a region boundary of the central picture region in the shooting range may be determined based on the association relationship.

The central picture region may be understood as a central region, in the shooting range, of the scene image photographed by the zoomable camera. A shooting range that can be captured by the zoomable camera is fixed at a focal length corresponding to the zoom ratio. When the shooting range is fixed, for a same scene image, sizes of displayed parts (central picture regions) at different zoom ratios are different.

In a second possible implementation:

The region of interest in the target scene viewed by the user is determined, according to an eye tracking algorithm, from the shooting range of the at least one zoomable camera. It may be understood that sizes and positions of regions of a left eye and a right eye of the user are usually fixed. A length and a width of the image can also be determined, so that the region of interest of the human eye of the user can be determined based on the sizes and positions of the regions of the left eye and the right eye.

For example, within a field of view of the user, a region on which the user focuses is determined according to the eye tracking algorithm, and the region is the region of interest of the user. In response to the zoom-in operation of the user, the scene image is captured via the at least one zoomable camera, and then the zoom-in operation is performed on the region of interest of the user.

In a third possible implementation:

A preview box is displayed on the display, and a preview image is displayed in the preview box. The preview image is obtained by capturing the target scene via the at least one zoomable camera. The preview image may be obtained by capturing the target scene via the zoomable camera in a case of 1X zoom. In response to a selection operation for a first region in the preview image, the first region is determined as the region of interest in the target scene viewed by the user.

In some possible implementations, in addition to the zoom-in processing, the image processing in this embodiment of this application may further include binocular disparity adjustment and/or image stabilization processing.

In a possible example, the wearable display device includes the first zoomable camera and the second zoomable camera. The first zoomable camera is configured to capture, at a zoom ratio, a first image viewed by the left eye. The first image may also be referred to as a left-eye scene image in this embodiment of this application. The second zoomable camera is configured to capture, at a zoom ratio, a second image viewed by the right eye. The second image may also be referred to as a right-eye scene image in this embodiment of this application. Further, when image processing is performed, binocular disparity adjustment may be first performed on the left-eye scene image and the right-eye scene image, and then zoom-in processing is performed on a region of interest obtained through binocular disparity adjustment. The regions of interest may be magnified to sizes of the left-eye display unit and the right-eye display unit. The zoom-in processing in this embodiment of this application includes super-resolution processing on an image whose size is magnified. In this embodiment of this application, the first zoomable camera may also be referred to as a left-eye zoomable camera, and the second zoomable camera may also be referred to as a right-eye zoomable camera. During subsequent description, an example in which the first zoomable camera is referred to as the left-eye zoomable camera and the second zoomable camera is referred to as the right-eye zoomable camera is used.

For example, performing image processing on the at least one scene image to obtain the left-eye target image and the right-eye target image in step 403 may be implemented in the following manner.

Binocular disparity adjustment is separately performed on the left-eye scene image and the right-eye scene image based on a distance between a left-eye pupil and a right-eye pupil of the user and positions of the first zoomable camera and the second zoomable camera on the head-mounted display device, to obtain a left-eye display view and a right-eye display view. Then, zoom-in processing is performed on an image in a region of interest in the left-eye display view to obtain the left-eye target image, and zoom-in processing is performed on an image in a region of interest in the right-eye display view to obtain the right-eye target image.

When binocular disparity adjustment is performed, with reference to the distance between the left eye pupil and the right eye pupil of the user and a specified value of disparity between the left eye and the right eye, viewpoint transformation is performed on the left-eye scene image and the right-eye scene image that are captured by the left-eye zoomable camera and the right-eye zoomable camera at a specified focal length, and the left-eye scene image and the right-eye scene image are reprojected to a left-eye viewing position and a right-eye viewing position on the display. When binocular disparity adjustment is performed, image processing may be performed based on a requirement and a setting of the user, to generate the left-eye display view and the right-eye display view generated based on the left-eye scene image and the right-eye scene image.

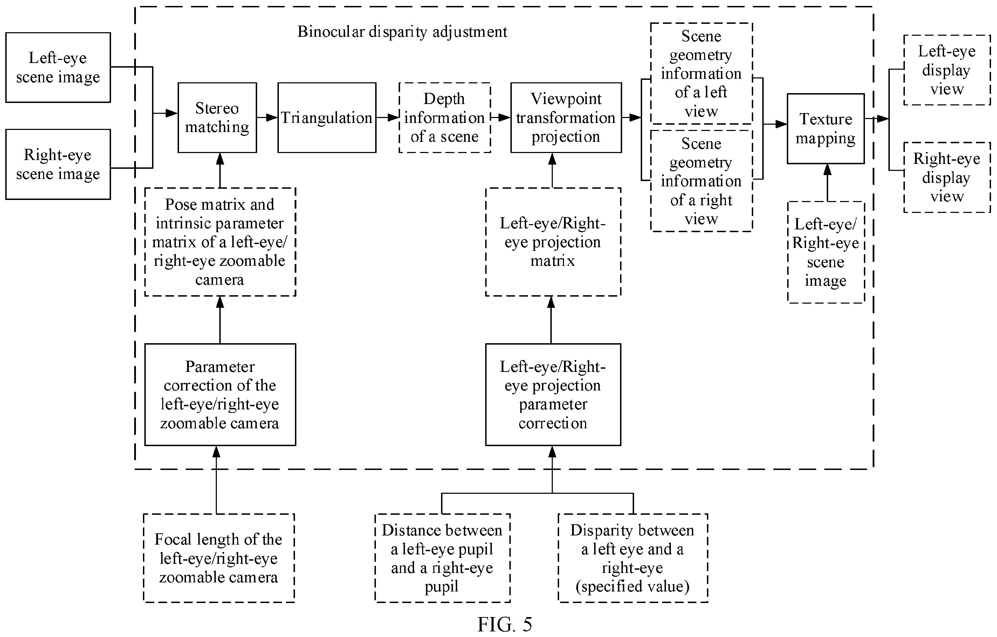

In an example, for a binocular disparity adjustment procedure, refer to FIG. 5. Specifically, steps such as parameter correction of the left-eye zoomable camera and parameter correction of the right-eye zoomable camera, left-eye projection parameter correction and right-eye projection parameter correction, stereo matching, triangulation processing, viewpoint transformation projection, and texture mapping may be included.

The parameter correction of the left-eye zoomable camera and the parameter correction of the right-eye zoomable camera include the following step.

A pose matrix (which may also be referred to as an extrinsic parameter matrix) and an intrinsic parameter matrix of the left-eye/right-eye zoomable camera may be generated through calibration based on a specified focal length of the left-eye/right-eye zoomable camera and a camera parameter of the left-eye/right-eye zoomable camera. The pose matrix of the left-eye/right-eye zoomable camera may be represented as $P_{Cam}^{L/R} = [\begin{smallmatrix} R_c^{L/R} & T_c^{L/R} \\ \vec{0} & 1 \end{smallmatrix}]$, where $R_c^{L/R}$ represents a 3*3 camera rotation matrix, L represents the left eye, and R represents the right eye. $T_c^{L/R}$ is a 3*1 camera translation matrix, and $P_{Cam}^{L/R}$ is a 4*4 pose matrix. The intrinsic parameter matrix of the left-eye/right-eye zoomable camera may be represented as $K_{Cam}^{L/R}$ , where f is the specified focal length of the zoomable camera.

$$K_{Cam}^{L/R} = \begin{bmatrix} 1/dx & 0 & u_0 \\ 0 & 1/dy & v_0 \\ 0 & 0 & 1 \end{bmatrix} \begin{bmatrix} f & 0 & 0 & 0 \\ 0 & f & 0 & 0 \\ 0 & 0 & 1 & 0 \end{bmatrix}$$

dx and dy respectively represent a quantity of length units occupied by a pixel in an x direction and a size of an actual physical value represented by the pixel, and a quantity of length units occupied by a pixel in a y direction and a size of an actual physical value represented by the pixel. ($u_0$, $v_0$) represents a center point of a pixel plane.

The left-eye/right-eye projection parameter correction includes the following step.

A left-eye/right-eye projection matrix may be generated based on the distance between the left-eye pupil and the right-eye pupil and the disparity of the user that are measured or set by the wearable display device. The left-eye/right-eye projection matrix may be represented as $P_{Eye}^{L/R} = [\begin{smallmatrix} R_e^{L/R} & T_e^{L/R} \\ \vec{0} & 1 \end{smallmatrix}]$ , where $R_e^{L/R}$ is a 3*3 binocular rotation matrix and represents a current gaze orientation of the two eyes, $T_e^{L/R} = [x_e^{L/R}, y_e^{L/R}, z_e^{L/R}]$ is a 3*1 binocular translation matrix, and x, y, and z may describe the pupillary distance and the specified disparity between the two eyes of the user.

A stereo matching operation and triangulation processing are performed on the left-eye/right-eye scene image to generate depth information of the captured scene. The stereo matching operation may be implemented through, but not limited to, matching algorithms such as block matching, optical flow matching, and deep learning matching. In a process of triangulation processing, depth estimation of the captured scene may be implemented based on a matching point in the left-eye/right-eye scene image, and the pose matrix and the intrinsic parameter matrix of the left-eye/right-eye zoomable camera.

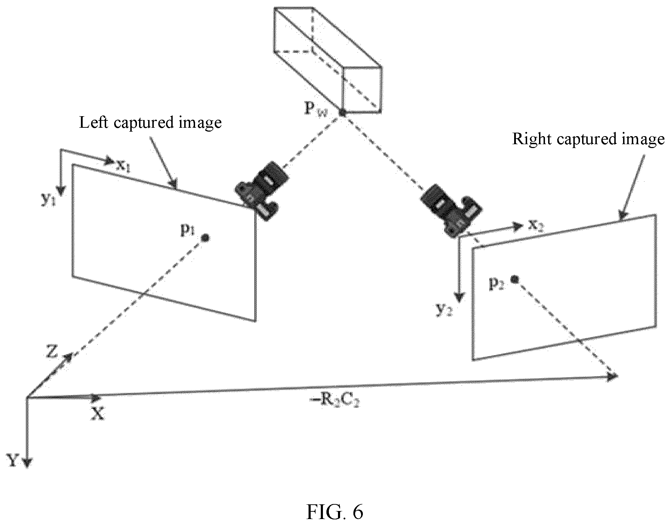

As shown in FIG. 6, $p_1$ and $p_2$ are projection points of a spatial point $p_w$ on the left-eye scene image and the right-eye scene image, and the two projection points may be marked through matching. A relationship between $p_1$ and the spatial point $p_w$ and a relationship between $p_2$ and the spatial point $p_w$ meet conditions shown in Formula (1) and Formula (2).

$$z_1 p_1 = K_{Cam}^L P_{Cam}^L \cdot p_w \qquad\qquad \text{Formula (1)}$$

$$z_2 p_2 = K_{Cam}^R P_{Cam}^R \cdot p_w \qquad\qquad \text{Formula (2)}$$

Coordinates of $p_1$ and $p_2$ may be obtained according to a stereo matching algorithm. The intrinsic parameter matrix and the extrinsic parameter matrix of the camera are known, and $z_1$ and $z_2$ are depths of $p_w$ in two camera coordinate systems of the left zoomable camera and the right zoomable camera. Triangulation processing may be performed by using a triangulation method to obtain coordinates of $p_w$, and values of $z_1$ and $z_2$. A scene depth map is obtained by calculating coordinates of $p_w$ corresponding to each point in the left scene image and the right scene image and the values of $z_1$ and $z_2$.

The triangulation method is to calculate a size of and a distance to an observed object based on a triangle formed by two zoomable cameras and the observed object, a spacing (generally referred to as a baseline distance) between the zoomable cameras, a focal length of a lens, and a similar triangle principle.

The viewpoint transformation projection includes the following step.

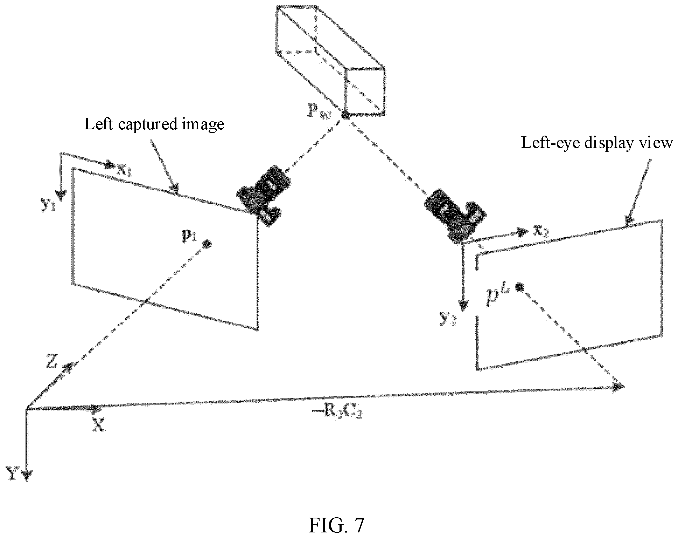

Reprojection is performed on the scene depth map based on the left-eye/right-eye projection matrix, to generate scene geometry information corresponding to the left/right view. The scene geometry information may describe information such as a depth and a perspective relationship of the scene, and matches the left/right eye. The scene geometry information may be represented by a projection matrix of the viewpoint transformation projection. As shown in FIG. 7, the projection matrix of the viewpoint transformation projection may be represented as Formula (3):

$$p^{L/R} = K_{Disp}^{L/R} P_{Eye}^{L/R} \cdot p_w \qquad\qquad \text{Formula (3)}$$

$P_{Eye}^{L/R}$ represents a projection matrix of viewpoint transformation projection of the left/right eye, $K_{Disp}^{L/R}$ is a 3*4 display projection matrix of the left-eye/right-eye display unit, s/dx and s/dy represent pixel projection scaling coefficients, and u'$_0$ and v'$_0$ are projection offsets. $K_{Disp}^{L/R}$ meets a condition shown in Formula (4).

$$K_{Disp}^{L/R} = \begin{bmatrix} s/dx & 0 & u'_0 & 0 \\ 0 & s/dy & v'_0 & 0 \\ 0 & 0 & 1 & 0 \end{bmatrix} \qquad \text{Formula (4)}$$

The texture mapping includes the following step.

Operations such as texture coloring, view wrapping, and depth-image-based rendering (depth-image-based rendering, DIBR) may be performed based on scene geometry information of estimated left/right view and the left-eye/right-eye scene image, to generate a left-eye/right-eye display view that matches the left/right eye.

In another possible example, the wearable display device includes one zoomable camera. Further, when image processing is performed, the left-eye display view and the right-eye display view are generated based on a scene image captured by the zoomable camera. Then, zoom-in processing is performed on a region of interest in the left-eye display view and a region of interest in the right-eye display view. The regions of interest may be magnified to sizes of the left-eye display unit and the right-eye display unit. The zoom-in processing in this embodiment of this application includes super-resolution processing on an image whose size is magnified.

For example, performing image processing on the at least one scene image to obtain the left-eye target image and the right-eye target image in step 403 may be implemented in the following manner.

Binocular disparity adjustment is performed on an image captured by the zoomable camera based on a distance between a left-eye pupil and a right-eye pupil of the user and a position of the zoomable camera on the head-mounted display device, to obtain a left-eye display view and a right-eye display view; and

zoom-in processing is performed on an image in the region of interest in the left-eye display view to obtain the left-eye target image, and zoom-in processing is performed on an image in the region of interest in the right-eye display view to obtain the right-eye target image.

In some possible embodiments, the image processing in this embodiment of this application further includes image stabilization processing. The head-mounted display device may further include an inertial measurement unit (IMU). The IMU is configured to output IMU measurement data. When a head of the user is deflected, image stabilization processing may be separately performed on the left-eye display view and the right-eye display view based on the IMU measurement data. Then, zoom-in processing is performed.

The IMU is a sensor used to measure acceleration and rotational motion. The IMU may usually measure an acceleration and an angular velocity along three axes (an X-axis, a Y-axis, and a Z-axis in an IMU coordinate system). IMU coordinate system: The IMU coordinate system uses a center of the IMU as an origin. The X-axis points to left and right directions of the IMU, the Y-axis points to front and back directions of the IMU, and the Z-axis points to up and down directions of the IMU.

In some possible implementations, the image processing mentioned in this embodiment of this application may further include image enhancement processing. The image enhancement processing may include at least one of the following:

image sharpening, image dehazing, image deraining, image deblurring, image demosaicing, image contrast enhancement, image color enhancement, image detail enhancement, image brightness enhancement, and the like.

For example, image enhancement processing may be separately performed on the left-eye display view and the right-eye display view.

Image sharpening (image sharpening) is used to compensate contours of the left-eye display view and right-eye display view, and enhance an edge and gray-scale transition of an image to make the image clear. There may be two types of processing: spatial domain processing and frequency domain processing.

In this embodiment of this application, an image enhancement-based dehazing algorithm, an image restoration-based dehazing algorithm, a deep learning-based dehazing algorithm, or the like may be used for dehazing.

The image enhancement-based dehazing algorithm aims to remove an image noise as much as possible and improve image contrast to restore a clear image without haze. The image enhancement-based dehazing algorithm may include one or more of histogram equalization (histogram equalization, HLE), adaptive histogram equalization (adaptive histogram equlization, AHE), contrast limited adaptive histogram equalization (contrast limited adaptive histogram equalization, CLAHE), a Retinex algorithm, wavelet transform, homomorphic filtering, and the like.

According to the image restoration-based dehazing algorithm, dehazing processing is performed based on an atmospheric degradation model. The image restoration-based dehazing algorithm may include one or more of single image haze removal using dark channel prior by He Kaiming, single image dehazing by Fattal, visibility in bad weather from a single image by Tan, and the like. Generally, dehazing effect of the atmospheric degradation model is better than dehazing effect of the image enhancement-based dehazing algorithm.

There are two types of deep learning-based dehazing algorithms. In a first deep learning-based dehazing algorithm, a parameter in an atmospheric degradation model may be estimated through a neural network by using the atmospheric degradation model. In a second deep learning-based dehazing algorithm, end-to-end training may be performed by using an input image with haze and an input image obtained through dehazing, to obtain a neural network model, and then inference is performed by using the image with haze as an input, to obtain the image obtained through dehazing.

In this embodiment of this application, the deraining algorithm may use a filtering-based deraining method or a deep learning-based deraining method. For example, in the filtering-based method, a raindrop is considered as an image noise for filtering processing. The deep learning-based deraining method mainly implements image deraining by constructing a neural network model and performing supervised training, semi-supervised training, unsupervised training, or the like with reference to datasets with rain and rain removal. For example, the deep learning-based deraining method may use self-aligned video deraining with transmission-depth consistency (Self-Aligned Video Deraining with Transmission-Depth Consistency), semi-supervised video deraining with dynamical rain generator (Semi-Supervised Video Deraining with Dynamical Rain Generator), or the like.

In this embodiment of this application, deblurring processing may be implemented via a neural network model. End-to-end training is performed by using an input blurred image and an input image obtained through deblurring to obtain a neural network model, and then inference is performed by using the blurred image as an input, to obtain the image obtained through deblurring.

In this embodiment of this application, demosaicing processing may also be implemented via a neural network model. End-to-end training is performed by using an input image with mosaic and an input image obtained through demosaicing to obtain a neural network model, and then inference is performed by using the image with mosaic as an input, to obtain the image obtained through demosaicing.

In some scenes, one or more neural network models may be constructed to implement processing such as image dehazing, image deraining, image deblurring, and image demosaicing.

In some embodiments, when it is determined that a visual assistance function is in an enabled state, a manner for magnifying an image provided in this embodiment of this application may be used to assist a user with a visual impairment to clearly see a distant object. For example, before step 4011 is performed, it may be first determined that the visual assistance function is in the enabled state. If the visual assistance function is in a disabled state, 4011 to 404 are not performed.

In some possible scenarios, if the user adjusts the magnification, 4011 to 404 are performed again. If the user reselects an ROI, 401 to 404 are performed. If the user does not adjust the magnification or reselect the ROI, for example, the user continuously watches, 4011 and 401 may not be performed again, and only 402 to 404 are continuously performed.

The following describes the solutions in embodiments of this application with reference to a scenario. For example, a user with presbyopia views an object via the head-mounted display device in this application.

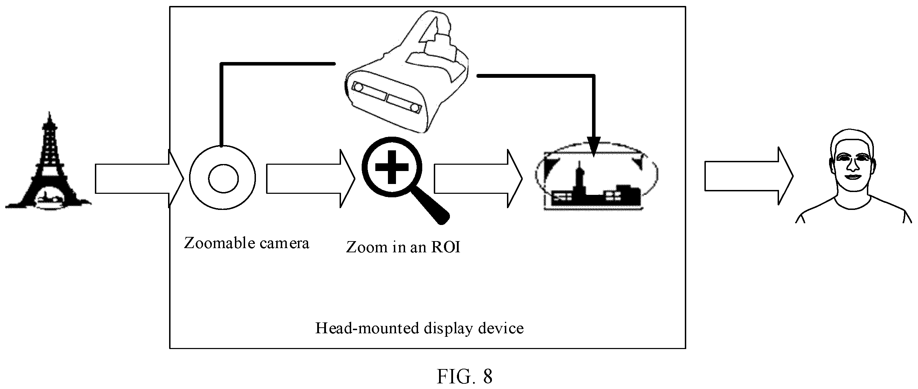

In this case, the user finds that he cannot clearly see an object in a target scene, as shown in FIG. 8. Therefore, the user may enable the visual assistance function, and send an input about a zoom ratio to the processor through the user interface by operating a knob or a button or performing another operation. For example, the zoom ratio is 4X. The processor determines, based on the zoom ratio 4X, a central picture region that is in a shooting range of the first zoomable camera and that corresponds to the zoom ratio, and determines a central picture region that is in a shooting range of the second zoomable camera and that corresponds to the zoom ratio. After the left-eye scene image is captured via the first zoomable camera and the right-eye scene image is captured via the second zoomable camera, disparity adjustment processing, image enhancement processing, and the like are separately performed on the left-eye scene image and the right-eye scene image, to obtain a processed left-eye display view and a processed right-eye display view. Then, zoom-in processing, for example, super-resolution processing, is performed on a region of interest in the left-eye display view and a region of interest in the right-eye display view, to obtain a left-eye target image and a right-eye target image. The left-eye target image and the right-eye target image are correspondingly displayed on the left-eye display unit and the right-eye display unit of the display.

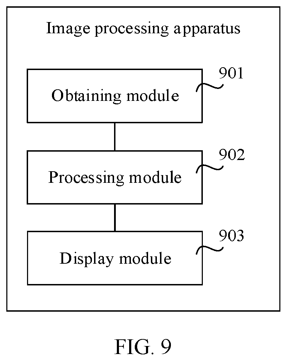

An embodiment of this application further provides an image processing apparatus. The image processing apparatus is included in a head-mounted display device. The head-mounted display device includes at least one zoomable camera and a display. Refer to FIG. 9. The image processing apparatus includes an obtaining module 901, a processing module 902, and a display module 903. In some possible embodiments, functions of the obtaining module 901, the processing module 902, and the display module 903 may all be implemented by a processor. In some other possible embodiments, a function of the obtaining module 901 may be implemented through a user interface. A function of the processing module 902 is implemented by the processor. A function of the display module 903 may be implemented by a display driver.

The obtaining module 901 is configured to obtain a zoom ratio.

The processing module 902 is configured to: determine a region of interest in a target scene, and capture at least one scene image for the target scene via the at least one zoomable camera; and perform image processing on the at least one scene image to obtain a left-eye target image and a right-eye target image. The image processing includes zoom-in processing performed on an image in the region of interest in the at least one image.

The display module 903 is configured to: display the left-eye target image on a left-eye display unit of the display, and display the right-eye target image on a right-eye display unit of the display.

In a possible implementation, the processing module 902 is specifically configured to determine, based on the zoom ratio, a central picture region corresponding to the zoom ratio from a shooting range of the at least one zoomable camera, where the central picture region is used as the region of interest.

In a possible implementation, the processing module 902 is specifically configured to determine, according to an eye tracking algorithm, the region of interest in the target scene from the shooting range of the at least one zoomable camera.

In a possible implementation, the at least one zoomable camera includes a first zoomable camera and a second zoomable camera. The first zoomable camera is configured to capture, within the shooting range, a first image viewed by a left eye, and the second zoomable camera is configured to capture, within the shooting range, a second image viewed by a right eye.

The processing module 902 is specifically configured to:

separately perform binocular disparity adjustment on the first image and the second image based on a distance between a left-eye pupil and a right-eye pupil of a user and positions of the first zoomable camera and the second zoomable camera on the head-mounted display device, to obtain a left-eye display view and a right-eye display view; and

perform zoom-in processing on an image in the region of interest in the left-eye display view to obtain the left-eye target image, and perform zoom-in processing on an image in the region of interest in the right-eye display view to obtain the right-eye target image.

In a possible implementation, the head-mounted display device includes one zoomable camera. The processing module 902 is specifically configured to:

perform, based on a distance between a left-eye pupil and a right-eye pupil of a user and a position of the zoomable camera on the head-mounted display device, binocular disparity adjustment on an image captured by the zoomable camera, to obtain a left-eye display view and a right-eye display view; and
perform zoom-in processing on an image in the region of interest in the left-eye display view to obtain the left-eye target image, and perform zoom-in processing on an image in the region of interest in the right-eye display view to obtain the right-eye target image.

In a possible implementation, the image processing further includes image enhancement processing for the left-eye display view and image enhancement processing for the right-eye display view.

The image enhancement processing includes at least one of the following:
image sharpening, image dehazing, image deraining, image deblurring, image demosaicing, image contrast enhancement, image color enhancement, image detail enhancement, or image brightness enhancement.

In a possible implementation, the head-mounted display device further includes an inertial measurement unit IMU. The processing module 902 is further configured to:

obtain IMU measurement data output by the inertial measurement unit IMU; and
when a head of the user is deflected, separately perform image stabilization processing on the left-eye display view and the right-eye display view based on the IMU measurement data.

In a possible implementation, the processing module 902 is further configured to: before the zoom ratio is obtained, determine that a visual assistance function is in an enabled state.

In a possible implementation, the head-mounted display device is a mixed reality MR helmet.

Based on the foregoing embodiments and a same concept, an embodiment of this application further provides a computer-readable storage medium. The computer-readable storage medium stores a computer-readable program. When the computer-readable program is run on a computer, the computer is enabled to perform the image processing method that is provided in the foregoing embodiments and that is applied to a head-mounted display device.

Based on the foregoing embodiments and a same concept, an embodiment of this application further provides a computer program product. When the computer program product runs on a computer, the computer is enabled to perform the image processing method that is provided in the foregoing embodiments and that is applied to a head-mounted display device.

Based on the foregoing embodiments and a same concept, an embodiment of this application further provides a chip. The chip is configured to read a computer program stored in a memory, and perform the image processing method that is provided in the foregoing embodiments and that is applied to a head-mounted display device.

Based on the foregoing embodiments and a same concept, an embodiment of this application further provides a chip system. The chip system includes a processor, configured to support a display apparatus in implementing the image processing method that is provided in the foregoing embodiments and that is applied to a head-mounted display device.

In a possible design, the chip system further includes a memory, and the memory is configured to store a program and data that are necessary for a computer apparatus.

In a possible design, the chip system includes a chip, or includes a chip and another discrete component.

All or some of the methods in embodiments of this application may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the process or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

This application is described with reference to the flowcharts and/or block diagrams of the method, the device (system), and the computer program product according to this application. It should be understood that the computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A head-mounted display device, comprising a first zoomable camera, a second zoomable camera, and a display, wherein

the first zoomable camera is configured to capture a first image viewed by a left eye of a user in a target scene;
the second zoomable camera is configured to capture a second image viewed by a right eye of the user in the target scene;
the display is configured to display a left-eye target image on a left-eye display unit of the display, and display a right-eye target image on a right-eye display unit of the display; and
the left-eye target image is obtained after zoom-in processing is performed on a region of interest ROI of the user comprised in the first image, and the right-eye target image is obtained after zoom-in processing is performed on the ROI comprised in the second image.

2. The head-mounted display device according to claim 1, wherein a zoom ratio used by the first zoomable camera to capture the first image is the same as or different from a zoom ratio used by the second zoomable camera to capture the second image; and
the zoom ratio used by the first zoomable camera and the zoom ratio used by the second zoomable camera are separately controlled.

3. The head-mounted display device according to claim 1 or 2, wherein the head-mounted display device further comprises a processor;

the processor is configured to separately perform image processing on the first image and the second image to obtain the left-eye target image and the right-eye target image; and
the image processing comprises zoom-in processing performed on the region of interest in the first image and the region of interest in the second image.

4. The head-mounted display device according to claim 3, wherein the processor is further configured to:
obtain the zoom ratio used by the first zoomable camera and the zoom ratio used by the second zoomable camera, and determine the regions of interest.

5. The head-mounted display device according to claim 4, wherein the processor is specifically configured to:
determine, based on the zoom ratios, central picture regions/a central picture region corresponding to the zoom ratios/zoom ratio from shooting ranges/a shooting range of the first zoomable camera and/or the second zoomable camera, wherein the central picture regions/ central picture region are/is used as the regions/region of interest.

6. The head-mounted display device according to claim 4, wherein the processor is specifically configured to:
determine, according to an eye tracking algorithm, the regions/region of interest from shooting ranges/a shooting range of the first zoomable camera and/or the second zoomable camera.

7. The head-mounted display device according to any one of claims 3 to 6, wherein the processor is specifically configured to:
perform, based on a distance between a left-eye pupil and a right-eye pupil of the user and positions of the first zoomable camera and the second zoomable camera on the head-mounted display device, binocular disparity adjustment on the first image and the second image, to obtain a left-eye display view and a right-eye display view;
perform zoom-in processing on the ROI in the left-eye display view to obtain the left-eye target image; and perform zoom-in processing on the ROI in the right-eye display view to obtain the right-eye target image.

8. The head-mounted display device according to claim 7, wherein the image processing further comprises image enhancement processing for the left-eye display view and the image enhancement processing for the right-eye display view; and
the image enhancement processing comprises at least one of the following:
image sharpening, image dehazing, image deraining, image deblurring, image demosaicing, image contrast enhancement, image color enhancement, image detail enhancement, or image brightness enhancement.

9. The head-mounted display device according to claim 7 or 8, wherein the head-mounted display device further comprises an inertial measurement unit IMU;

the inertial measurement unit IMU is configured to output IMU measurement data; and
the processor is further configured to: when a head of the user is deflected, separately perform image stabilization processing on the left-eye display view and the right-eye display view based on the IMU measurement data.

10. The head-mounted display device according to any one of claims 1 to 9, wherein the head-mounted display device is a mixed reality MR helmet.

11. An image processing method, applied to a head-mounted display device, wherein the head-mounted display device comprises a first zoomable camera, a second zoomable camera, and a display;

determining regions of interest ROIs in a target scene, capturing, via the first zoomable camera, a first image viewed by a left eye of a user in the target scene, and capturing, via the second zoomable camera, a second image viewed by a right eye of the user in the target scene;

separately performing image processing on the first image and the second image to obtain a left-eye target image and a right-eye target image, wherein the image processing comprises zoom-in processing performed on the ROIs in the first image and the second image; and

displaying the left-eye target image on a left-eye display unit of the display, and displaying the right-eye target image on a right-eye display unit of the display.

12. The method according to claim 11, wherein the determining ROIs in a target scene comprises:

obtaining the zoom ratios, and determining central picture regions/a central picture region corresponding to the zoom ratios/zoom ratio from shooting ranges/a shooting range of the first zoomable camera and/or the second zoomable camera, wherein the central picture regions/central picture region are/is the ROIs/ROI.

13. The method according to claim 11, wherein the determining ROIs in a target scene comprises:

determining, according to an eye tracking algorithm, the ROIs/ROI from shooting ranges/a shooting range of the first zoomable camera and/or the second zoomable camera.

14. The method according to any one of claims 11 to 13, wherein the separately performing image processing on the first image and the second image to obtain a left-eye target image and a right-eye target image comprises:

separately performing binocular disparity adjustment on the first image and the second image based on a distance between a left-eye pupil and a right-eye pupil of the user and positions of the first zoomable camera and the second zoomable camera on the head-mounted display device, to obtain a left-eye display view and a right-eye display view; and

performing zoom-in processing on the ROI in the left-eye display view to obtain the left-eye target image, and performing zoom-in processing on the ROI in the right-eye display view to obtain the right-eye target image.

15. The method according to claim 14, wherein the image processing further comprises image enhancement processing for the left-eye display view and the image enhancement processing for the right-eye display view; and

the image enhancement processing comprises at least one of the following:

image sharpening, image dehazing, image deraining, image deblurring, image demosaicing, image contrast enhancement, image color enhancement, image detail enhancement, or image brightness enhancement.

16. The method according to claim 14 or 15, wherein the head-mounted display device further comprises an inertial measurement unit IMU, and the method further comprises:

obtaining IMU measurement data output by the inertial measurement unit IMU; and

when a head of the user is deflected, separately performing image stabilization processing on the left-eye display view and the right-eye display view based on the IMU measurement data.

17. The method according to any one of claims 11 to 16, wherein the head-mounted display device is a mixed reality MR helmet.

18. A computer-readable storage medium, wherein the computer-readable storage medium stores a computer program or instructions, and when the computer program or the instructions are executed by a head-mounted display device, the head-mounted display device is enabled to perform the method according to any one of claims 11 to 17.

19. A computer program product, wherein the computer program product comprises a computer program or instructions, and when the computer program or the instructions are executed by a head-mounted display device, the method according to any one of claims 11 to 17 is implemented.

Processor 140

Display 160

| Zoomable camera 120 | Data interface | CPU | Image processing module | Left-eye display unit |
| | Control interface | | | Right-eye display unit |

FIG. 1A

Processor 140

Display 160

| First zoomable camera 120-1 | Data interface | CPU | Image processing module | Left-eye display unit |
| | Control interface | | | |
| Second zoomable camera 120-2 | Data interface | | | Right-eye display unit |
| | Control interface | | | |

FIG. 1B

EP 4 607 264 A1

FIG. 1C

FIG. 2

20

FIG. 3

| | |
|---|---|
| Determine a region of interest in a target scene viewed by a user via a head-mounted display device | 401 |

↓

| | |
|---|---|
| Capture at least one scene image for the target scene via at least one zoomable camera | 402 |

↓

| | |
|---|---|
| Perform image processing on the at least one scene image to obtain a left-eye target image and a right-eye target image, where the image processing includes zoom-in processing performed on an image in the region of interest in the at least one scene image | 403 |

↓

| | |
|---|---|
| Display the left-eye target image on a left-eye display unit of a display, and display the right-eye target image on a right-eye display unit of the display | 404 |

FIG. 4A

| Obtain a zoom ratio | 4011 |
|---|---|

| Determine a region of interest in a target scene viewed by a user via a head-mounted display device | 401 |
|---|---|

| Capture at least one scene image for the target scene via at least one zoomable camera | 402 |
|---|---|

| Perform image processing on the at least one scene image to obtain a left-eye target image and a right-eye target image, where the image processing includes zoom-in processing performed on an image in the region of interest in the at least one scene image | 403 |
|---|---|

| Display the left-eye target image on a left-eye display unit of a display, and display the right-eye target image on a right-eye display unit of the display | 404 |
|---|---|

FIG. 4B

Binocular disparity adjustment

Left-eye scene image

Right-eye scene image

Stereo matching

Triangulation

Depth information of a scene

Viewpoint transformation projection

Scene geometry information of a left view

Scene geometry information of a right view

Texture mapping

Left-eye display view

Right-eye display view

Pose matrix and intrinsic parameter matrix of a left-eye/ right-eye zoomable camera

Left-eye/Right-eye projection matrix

Left-eye/ Right-eye scene image

Parameter correction of the left-eye/right-eye zoomable camera

Left-eye/Right-eye projection parameter correction

Focal length of the left-eye/right-eye zoomable camera

Distance between a left-eye pupil and a right-eye pupil

Disparity between a left eye and a right-eye (specified value)

FIG. 5

FIG. 6

Left captured image

$P_W$

Left-eye display view

$x_1$

$y_1$

$p_1$

$x_2$

$p^L$

$y_2$

Z

$-R_2C_2$

X

Y

FIG. 7

Zoomable camera  Zoom in an ROI

Head-mounted display device

FIG. 8

Image processing apparatus

Obtaining module 901

Processing module 902

Display module 903

FIG. 9

## INTERNATIONAL SEARCH REPORT

| International application No. |
| --- |
| **PCT/CN2023/137011** |

| A. | CLASSIFICATION OF SUBJECT MATTER |
| --- | --- |

G02B27/01(2006.01)i

According to International Patent Classification (IPC) or to both national classification and IPC

| B. | FIELDS SEARCHED |
| --- | --- |

Minimum documentation searched (classification system followed by classification symbols)

G02B27

Documentation searched other than minimum documentation to the extent that such documents are included in the fields searched

Electronic data base consulted during the international search (name of data base and, where practicable, search terms used)

CNTXT, ENTXTC, DWPI, CNKI: 头戴, 显示, 眼镜, 头盔, 混合现实, 增强现实, 虚拟现实, 变焦, 变倍, 摄像, 相机, 左, 右, 感兴趣, 放大, 变焦比, 变倍比, 变焦倍率, 不同, 视差, 锐化, 去雾, 惯性测量, 程序, head mounted, display+, eyeglass, MR, AR, VR, mixed reality, augment reality, virtual reality, zoom+, camera, left, right, ROI, region of interest, magnification, ratio, different, parallax, sharpening, inertia measurement, IMU, program+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106796344 A (ELBIT SYSTEMS LTD.) 31 May 2017 (2017-05-31) claims 1-36, description, paragraphs 23-24 and 38-42, and figures 1-7 | 1-19 |
| A | US 2019025588 A1 (OSTERHOUT GROUP, INC.) 24 January 2019 (2019-01-24) entire document | 1-19 |
| A | CN 115103094 A (SHENZHEN TIANQU XINGKONG TECHNOLOGY CO., LTD.) 23 September 2022 (2022-09-23) entire document | 1-19 |
| A | CN 113709410 A (HUANXIE TECHNOLOGY (WUHAN) CO., LTD.) 26 November 2021 (2021-11-26) entire document | 1-19 |
| A | US 2018143442 A1 (GUPTA AMITABHA) 24 May 2018 (2018-05-24) entire document | 1-19 |
| A | CN 105988218 A (XIE PEISHU) 05 October 2016 (2016-10-05) entire document | 1-19 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **05 February 2024** | **23 February 2024** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/137011** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 112995507 A (BEIJING SUPERHEXA CENTURY TECHNOLOGY CO., LTD.) 18 June 2021 (2021-06-18)<br>entire document | 1-19 |

Form PCT/ISA/210 (second sheet) (July 2022)

## INTERNATIONAL SEARCH REPORT
### Information on patent family members

International application No.

**PCT/CN2023/137011**

| Patent document cited in search report | | | Publication date (day/month/year) | Patent family member(s) | | | Publication date (day/month/year) |
|---|---|---|---|---|---|---|---|
| CN | 106796344 | A | 31 May 2017 | US | 2017318235 | A1 | 02 November 2017 |
| | | | | US | 9967475 | B2 | 08 May 2018 |
| | | | | WO | 2016056004 | A1 | 14 April 2016 |
| | | | | EP | 3204816 | A1 | 16 August 2017 |
| | | | | EP | 3204816 | A4 | 20 June 2018 |
| | | | | EP | 3204816 | B1 | 18 December 2019 |
| | | | | CN | 106796344 | B | 09 January 2018 |
| | | | | IN | 201717010342 | A | 08 September 2017 |
| | | | | IN | 459243 | B | 20 October 2023 |
| US | 2019025588 | A1 | 24 January 2019 | US | 2023130723 | A1 | 27 April 2023 |
| | | | | US | 2020201050 | A1 | 25 June 2020 |
| | | | | US | 11042035 | B2 | 22 June 2021 |
| | | | | US | 2021349318 | A1 | 11 November 2021 |
| | | | | US | 11567328 | B2 | 31 January 2023 |
| | | | | US | 10578869 | B2 | 03 March 2020 |
| CN | 115103094 | A | 23 September 2022 | None | | | |
| CN | 113709410 | A | 26 November 2021 | None | | | |
| US | 2018143442 | A1 | 24 May 2018 | EP | 3327485 | A1 | 30 May 2018 |
| | | | | EP | 3327485 | B1 | 16 November 2022 |
| | | | | CA | 2985904 | A1 | 18 May 2018 |
| | | | | US | 10869026 | B2 | 15 December 2020 |
| CN | 105988218 | A | 05 October 2016 | WO | 2016149956 | A1 | 29 September 2016 |
| CN | 112995507 | A | 18 June 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211606269